# EUROPEAN PATENT SPECIFICATION

(11) **EP 1 683 422 B1**
(45) Date of publication and mention of the grant of the patent: **03.09.2008**
(21) Application number: 06100722.5
(22) Date of filing: 23.01.2006
(51) Int. Cl.: A23B 4/28, A22C 9/00, A22C 17/00, A23L 3/3589

(54) **Device for introducing brine into an animal product**
Vorrichting zum Einbringen von Lake in ein tierisches Produkt
Dispositif permettant l'introduction de saumure dans un produit animal

(30) Priority: 24.01.2005 NL 1028102
(43) Date of publication of application: 26.07.2006
(73) Proprietor: CFS Bakel B.V., 5761 EN Bakel (NL)
(72) Inventor: Boogers, George Lambertus Josephus Maria, 5406 AR, Uden (NL)
(74) Representative: Kutzenberger, Helga

(56) References cited:
- EP-A- 0 396 847
- DE-A1- 19 719 416
- US-A- 2 796 017
- US-B1- 6 658 990

## Description

The invention relates to a device for introducing a liquid, such as brine, into an animal product, such as meat, ham and the like, comprising a mounting member on which the product can be arranged, a holder at some distance from the mounting member, which holder bears a multiplicity of hollow needles oriented transversely with respect to the mounting member and which holder can move to and fro transversely to the mounting member for inserting the needles into the product or, alternatively, for extracting the needles from the product, which needles have at least one discharge orifice near their free end and one feed orifice at some distance from said free end, which needles are accommodated in the holder such that they can be displaced in the longitudinal direction between a position projecting relatively far out of the holder, in which the feed orifices are blocked, and a position projecting relatively less far out of the holder, in which the feed orifices have a flow connection to a liquid supply.

A device of this type is known, see, e.g. US-A-2796017. The holder thereof is a component rigidly accommodated in a frame that also constitutes a boundary for a liquid reservoir. This known device has various disadvantages. First of all, cleaning the needles and the associated guide mechanisms is troublesome. The needles and the holder cannot easily be taken apart, so cleaning cannot always be done satisfactorily or is associated with a relatively long downtime of the device in connection with taking apart and putting together the various components. This also means that it is not easy to replace the needles.

The aim of the invention is therefore to provide a device of the abovementioned type which does not have these disadvantages. This aim is achieved in that the liquid supply comprises channels located in the holder. As a result of the presence of the channels in the holder the liquid reservoir can be arranged some distance away. The holder thus no longer constitutes a boundary for said liquid reservoir, such that the holder is more easily accessible and can even be removed without problems in connection with maintenance, cleaning and the like.

The setup of the needles can also be implemented in a better, more stable manner. For instance, each needle can extend right across a channel in such a way that in the position of the needles projecting relatively less far out of the holder there is a flow connection between the feed orifices and a channel. The needles can in particular be stably supported if pairs of openings open into the channels, which openings of each pair are aligned with respect to one another and define a passage for one needle in each case oriented transversely to the channel. Several parallel channels are provided, wherein a series of needles positioned in parallel alongside and at some distance from each other extends through each channel.

The holder comprises a block or a plate of relatively large thickness. Such a holder can be accommodated in a detachable manner on a frame, which frame and holder are provided with a liquid coupling. The frame preferably comprises an accommodation space enclosed by two supports opposite one another, while the holder is accommodated with a tight fit in said accommodation space. In this embodiment the block can be very easily placed in the frame or removed from the frame, so that cleaning and possible replacement of the needles can be carried out very quickly and easily.

In one of the supports there can be a liquid chamber which has a number of branches which open into the accommodation space, while the holder can have a number of channels, each of which is connected to a respective branch. According to a preferred embodiment the ends of the channels facing the branches can each have a sealing ring which interacts in a sealing manner with the opposing wall of the support in which the branches emerge. Furthermore, the channels can extend between two opposite sides of the holder and have a sealing ring at each end which interacts in a sealing manner with a respective support. In this embodiment the block may be placed in the frame in two orientations, with one of the ends of the channels adjoining the branches in the support concerned in each case. The other ends are then sealed with respect to the other support.

According to the invention the device can have several holders next to one another. In the event of damage or the like, only the block in which the damaged needle occurs then needs to be removed, thus simplifying the repair work. The size of the device can also be quite easily adapted by using more or fewer such blocks.

The invention also relates to a holder for a device as described above.

The invention will be explained in more detail below with reference to an illustrative embodiment shown in the figures.
Figure 1 shows diagrammatically a cross-section through a device according to the invention.
Figure 2 shows a cross-section on a larger scale.
Figure 3 shows a plan view of the holder
Figure 4 shows a perspective view of the holder.

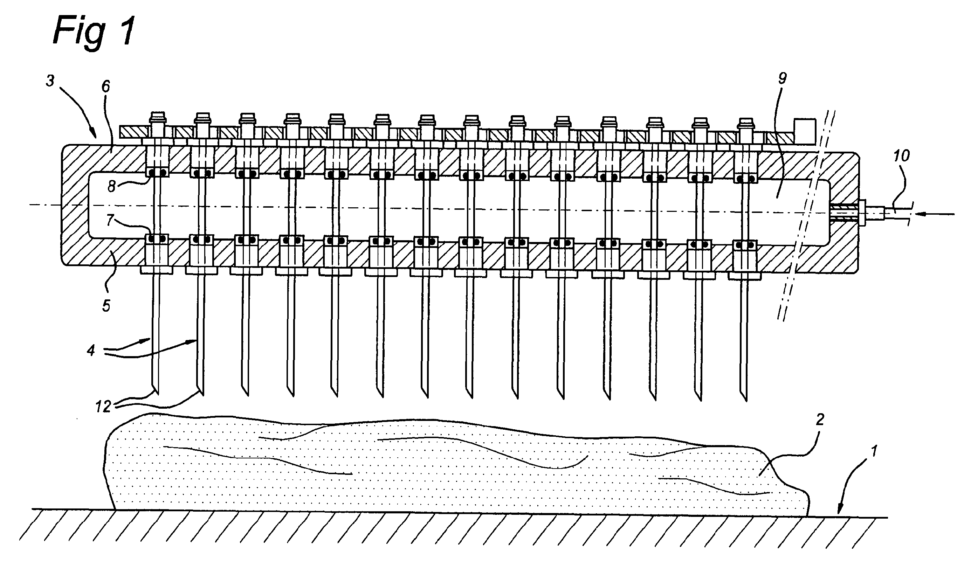

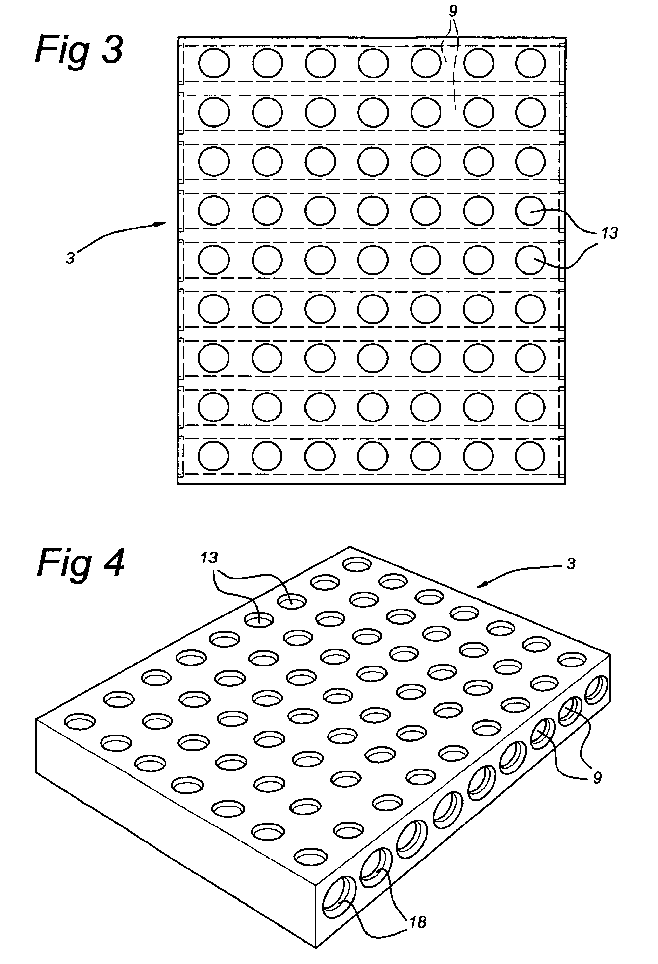

The device shown in cross-section in Figure 1 for introducing a liquid comprises a mounting member 1 on which a meat product 2 is located. The holder, indicated by 3 and from the underside of which a multiplicity of needles 4 projects, is positioned above the mounting member 1. The holder 3 has a lower wall 5 and an upper wall 6, through which the needles are directed via sealing rings 7, 8, respectively: see also Figure 4.

Between the walls 5, 6 of the holder 3 are channels 9, to which a liquid, such as brine, can be fed via the liquid supply 10.

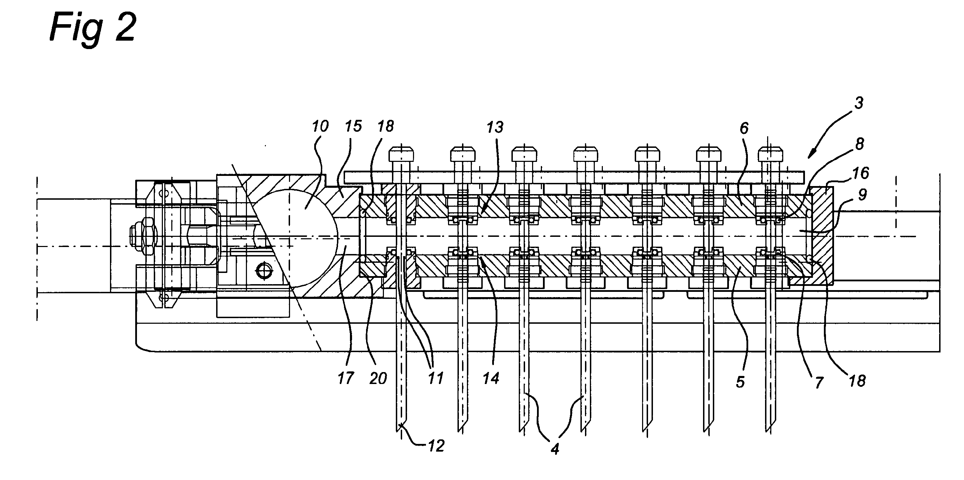

For introduction of the liquid into the meat product 2, the holder 3 is moved in its entirety downwards towards the mounting member 1. The needles 4 are then in the position shown in Figure 2. In this position the feed orifice 11 is situated just past the bottom sealing ring 7 with respect to the chamber 9. Consequently, the liquid cannot penetrate into the hollow needles 4 from the chamber 9.

As soon as one or more needles 4 come into contact with the meat product 2, they are pushed up slightly with respect to the holder 3. There is then a flow connection between the feed orifice 11 and the chamber 9, such that the liquid can flow towards the discharge orifices 12 at the bottom of the needles 4. At this point introduction of the liquid into the meat product 2 begins. Of importance is the fact that the needles 4 which are not in contact with the meat product remain closed so that no liquid is lost.

According to the invention the holder 3 is provided with a series of parallel channels 9 into which pairs of openings 13, 14 open. The holder 3 consists of a block or a relatively thick plate and thus constitutes an entity. It is preferably made of a plastic.

As shown in Figure 2, the holder 3 is accommodated on a pair of supports 15, 16. A main channel 10, from where branches 17 extend transversely that are aligned with respect to one channel 9 each, is located in support 15. The holder 3 is accommodated with a tight fit between the supports 15, 16 and sealed with respect to the branches 17 by O-rings 18. On the other side of the holder 3, the channels 9 are sealed with respect to support 16 by O-rings 18.

The advantage of the holder 3 according to the invention is that it can be removed very easily from the supports 15, 16 in connection with cleaning or replacing needles and the like.

## Claims

1. Device for introducing a liquid, such as brine, into an animal product (2), such as meat, ham and the like, comprising a mounting member (1), on which the product (2) can be arranged, a holder (3) at some distance from the mounting member (1), which holder (3) bears a multiplicity of hollow needles (4) oriented transversely with respect to the mounting member (1) and which holder (3) can move to and fro transversely to the mounting member (1) for inserting the needles (4) into the product (2) or, alternatively, for extracting the needles (4) from the product (2), which needles (4) have at least one discharge orifice (12) near their free end and one feed orifice (11) at some distance from said free end, which needles (4) are accommodated in the holder (3) such that they can be displaced in the longitudinal direction between a position projecting relatively far out of the holder (3), in which the feed orifices (11) are blocked, and a position projecting relatively less far out of the holder (3), in which the feed orifices (11) have a flow connection to a liquid supply (9, 10), whereas the liquid supply comprises channels (9) located in the holder (3), **characterized in, that** the holder comprises a block or a plate of relatively large thickness with pairs of openings (13, 14) which open into the channels (9), each pair of openings (13, 14) are aligned with respect to one another and define a passage for the longitudinal displacement of one needle (4) in each case oriented transversely to the channel (9).

2. Device according to Claim 1, wherein each needle (4) extends right across a channel (9) in such a way that in the position of the needles (4) projecting relatively less far out of the holder there is a flow connection between the feed orifices (11) and a channel (9).

3. Device according to Claim 2, wherein several parallel channels (9) are provided and a series of needles (4) positioned in parallel alongside and some distance from each other extends through each channel (9).

4. Device according to Claim 1, wherein in each opening (13, 14) there is a scaling ring (7, 8) in which the needle (4) is accommodated such that it can be displaced.

5. Device according to one of the preceding claims, wherein the holder (3) is accommodated in a detachable manner on a frame (15, 16) and the frame (15, 16) and the holder (3) are provided with a liquid coupling.

6. Device according to Claim 5, wherein the frame defines an accommodation space enclosed by two supports (15, 16) opposite one another and the holder (3) is accommodated with a tight fit in said accommodation space.

7. Device according to Claim 6, wherein in one (15) of the supports there is a liquid chamber (10) which has a number of branches (17) which open into the accommodation space and the holder (3) has a number of channels (9), each of which is connected to a respective branch (17).

8. Device according to Claim 7, wherein the ends of the channels (9) facing the branches (17) each have a sealing ring (18) which interacts in a sealing manner with the opposing wall (20) of the support (15) in which the branches (17) emerge.

9. Device according to Claim 7 or 8, wherein the channels (9) extend between two opposite sides of the holder (3) and have a sealing ring (18) at each end which interacts in a sealing manner with a respective support (15, 16).

10. Device according to one of the preceding claims, wherein several holders (3) are provided next to one another.

11. Holder (3) for a device according to one of the preceding claims, **characterized by** channels (9) which have connecting means (18) at one end for supplying a liquid, as well as openings (13, 14) oriented transversely to the channels (9) for accommodating hollow needles (4) comprising a block or a plate of relatively large thickness and wherein pairs of openings (13,14) open into the channels (9), which openings (13,14) of each pair are aligned with respect to one another and define a passage for one needle (4) in each case oriented transversely to the channel (9).

12. Holder (3) according to Claim 11, wherein the channels (9) have connecting means at two opposite ends for supplying a liquid.

13. Holder (3) according to Claim 11 or 12, wherein several parallel channels (9) are provided.

14. Holder (3) according to Claims 11, 12 or 13, wherein in each opening (13, 14) there is a sealing ring (7, 8) in which the needle (4) can be accommodated.

## Patentansprüche

1. Vorrichtung zur Einführung einer Flüssigkeit, wie z.B. Lake, in ein tierisches Produkt (2), wie z.B. Fleisch, Schinken und dergleichen, mit einem Befestigungselement (1), auf dem das Produkt (2) angeordnet werden kann, einem Halter (3) in einem Abstand vom Befestigungselement (1), wobei der Halter (3) eine Vielzahl von Hohlnadeln (4) trägt, die relativ zum Befestigungselement (1) quer angeordnet sind, und wobei sich der Halter (3) quer zum Befestigungselement (1) vor und zurück bewegen kann, um die Nadeln (4) in das Produkt (2) einzuführen oder um alternativ die Nadeln (4) aus dem Produkt (2) herauszuziehen, wobei die Nadeln (4) mindestens eine Auslassöffnung (12) in der Nähe ihres freien Endes und eine Zufuhröffnung (11) im Abstand von diesem freien Ende haben, wobei die Nadeln (4) so im Halter (3) aufgenommen sind, dass sie in Längsrichtung zwischen einer Position, in der sie relativ weit aus dem Halter (3) vorstehen und in der die Zufuhröffnungen (11) blockiert sind, und einer Position, in der sie relativ weniger weit aus dem Halter (3) vorstehen und in der die Zufuhröffnungen (11) mit einer Flüssigkeitszufuhr (9, 10) in Fließverbindung stehen, verschoben werden können, wobei die Flüssigkeitszufuhr Kanäle (9) umfasst, die im Halter (3) angeordnet sind, **dadurch gekennzeichnet, dass** der Halter einen Block oder eine Platte relativ großer Dicke mit Öffnungspaaren (13, 14), die in die Kanäle (9) öffnen, umfasst, wobei jedes Öffnungspaar (13, 14) relativ zum jeweils anderen ausgerichtet ist und einen Durchgang für die Längsverschiebung einer Nadel (4) jeweils in Querorientierung zum Kanal (9) definiert.

2. Vorrichtung nach Anspruch 1, worin jede Nadel (4) sich über einen Kanal (9) erstreckt, so dass in der Position, in der die Nadeln (4) relativ weniger weit aus dem Halter vorstehen, eine Fließverbindung zwischen den Zufuhröffnungen (11) und einem Kanal (9) besteht.

3. Vorrichtung nach Anspruch 2, worin mehrere parallele Kanäle (9) vorgesehen sind und sich eine Reihe von Nadeln (4), die parallel längs und im Abstand voneinander positioniert sind, durch jeden Kanal (9) erstrecken.

4. Vorrichtung nach Anspruch 1, worin in jeder Öffnung (13, 14) ein Skalierring (7,8) sitzt, in dem die Nadel (4) so aufgenommen ist, dass sie verschoben werden kann.

5. Vorrichtung nach einem der vorhergehenden Ansprüche, worin der Halter (3) lösbar auf einem Rahmen (15, 16) untergebracht ist und der Rahmen (15, 16) und der Halter (3) mit einer Flüssigkeitskupplung versehen sind.

6. Vorrichtung nach Anspruch 5, worin der Rahmen einen Unterbringungsraum definiert, der von zwei gegenüberliegenden Stützen (15, 16) umschlossen ist und der Halter (3) fest im Unterbringungsraum aufgenommen ist.

7. Vorrichtung nach Anspruch 6, worin sich in einer (15) der Stützen eine Flüssigkeitskammer (10) befindet, die eine Reihe von Abzweigungen (17) aufweist, die sich in den Unterbringungsraum öffnen, und der Halter (3) eine Reihe von Kanälen (9) aufweist, die jeweils mit einer Verzweigung (17) verbunden sind.

8. Vorrichtung nach Anspruch 7, worin die Enden der Kanäle (9), die zu den Verzweigungen (17) hin weisen, jeweils einen Dichtungsring (18) aufweisen, der dichtend mit der gegenüberliegenden Wand (20) der Stütze (15) zusammenarbeitet, in der die Verzweigungen (17) hervortreten.

9. Vorrichtung nach Anspruch 7 oder 8, worin die Kanäle (9) sich zwischen zwei gegenüberliegenden Seiten des Halters (3) erstrecken und einen Dichtungsring (18) an jedem Ende aufweisen, der dichtend mit jeweils einer Stütze (15, 16) zusammenarbeitet.

10. Vorrichtung nach einem der vorhergehenden Ansprüche, worin mehrere Halter (3) nebeneinander vorgesehen sind.

11. Halter (3) für eine Vorrichtung nach einem der vorhergehenden Ansprüche, **gekennzeichnet durch** Kanäle (9), die an einem Ende ein Verbindungsmittel (18) zum Zuführen einer Flüssigkeit und Öffnungen (13, 14), die quer zu den Kanälen (9) orientiert sind, zum Aufnehmen von Hohlnadeln (4) aufweisen, mit einem Block oder einer Platte relativ großer Dicke, und worin Öffnungspaare (13, 14) in die Kanäle (9) öffnen, wobei jedes Öffnungspaar (13, 14) relativ zum jeweils anderen ausgerichtet ist und einen Durchgang für eine Nadel (4) jeweils in Querorientierung zum Kanal (9) definiert.

12. Halter (3) nach Anspruch 11, worin die Kanäle (9) an zwei gegenüberliegenden Enden Verbindungsmittel zum Zuführen einer Flüssigkeit aufweisen.

13. Halter (3) nach Anspruch 11 oder 12, worin mehrere parallele Kanäle (9) vorgesehen sind.

14. Halter (3) nach Anspruch 11, 12, oder 13, worin in jeder Öffnung (13, 14) ein Dichtungsring (7, 8) vorgesehen ist, in dem die Nadel (4) aufgenommen werden kann.

## Revendications

1. Dispositif destiné à introduire un liquide, tel que de la saumure, dans un produit animal (2), tel que de la viande, du jambon ou similaire, comportant un élément (1) de monture sur lequel le produit (2) peut être disposé, un support (3) situé à une certaine distance de l'élément (1) de monture, ledit support (3) portant une multiplicité d'aiguilles creuses (4) orientées transversalement par rapport à l'élément (1) de monture et ledit support (3) pouvant aller et venir transversalement par rapport à l'élément (1) de monture pour insérer les aiguilles (4) dans le produit (2) ou, alternativement, pour extraire les aiguilles (4) du produit (2), lesdites aiguilles (4) étant dotées d'au moins un orifice (12) de refoulement près de leur extrémité libre et d'un orifice (11) d'alimentation à une certaine distance de ladite extrémité libre, lesdites aiguilles (4) étant logées dans le support (3) de telle sorte qu'elles puissent être déplacées dans la direction longitudinale entre une position dépassant relativement loin hors du support (3), dans laquelle les orifices (11) d'alimentation sont bouchés, et une position dépassant relativement moins loin hors du support (3), dans laquelle les orifices (11) d'alimentation sont en communication d'écoulement avec une alimentation (9, 10) en liquide, l'alimentation en liquide comportant des conduits (9) situés dans le support (3), **caractérisé en ce que** le support comporte un bloc ou une plaque d'épaisseur relativement importante doté(e) de paires d'ouvertures (13, 14) qui débouchent dans les conduits (9), les ouvertures (13, 14) de chaque paire étant alignées l'une par rapport à l'autre et définissant un passage pour le déplacement longitudinal d'une aiguille (4), dans chaque cas orientée transversalement par rapport au conduit (9).

2. Dispositif selon la revendication 1, chaque aiguille (4) s'étendant de part en part à travers un conduit (9) de telle sorte que, dans la position des aiguilles (4) dépassant relativement moins loin hors du support, il existe une communication d'écoulement entre les orifices (11) d'alimentation et un conduit (9).

3. Dispositif selon la revendication 2, plusieurs conduits (9) parallèles étant aménagés et une série d'aiguilles (4) positionnées en parallèle côte à côte et à une certaine distance l'une de l'autre s'étendant à travers chaque conduit (9).

4. Dispositif selon la revendication 1, comportant dans chaque ouverture (13, 14) un anneau (7, 8) d'étanchéité dans lequel l'aiguille (4) est logée de telle sorte qu'elle puisse être déplacée.

5. Dispositif selon l'une des revendications précédentes, le support (3) étant logé de manière détachable sur une armature (15, 16) et l'armature (15, 16) et le support (3) étant pourvus d'un couplage à liquide.

6. Dispositif selon la revendication 5, l'armature définissant un espace de logement enveloppé par deux éléments (15, 16) de soutien situés l'un en face de l'autre et le support (3) étant logé avec un ajustement serré dans ledit espace de logement.

7. Dispositif selon la revendication 6, l'un (15) des éléments de soutien contenant une chambre (10) à liquide munie d'un certain nombre de branches (17) qui débouchent dans l'espace de logement et le support (3) comprenant un certain nombre de conduits (9) dont chacun est relié à une branche (17) correspondante.

8. Dispositif selon la revendication 7, les extrémités des conduits (9) orientées face aux branches (17) étant chacune dotée d'un anneau (18) d'étanchéité qui interagit de manière étanche avec la paroi opposée (20) de l'élément (15) de soutien dans lequel aboutissent les branches (17).

9. Dispositif selon la revendication 7 ou 8, les conduits (9) s'étendant entre deux côtés opposés du support (3) et étant dotés à chaque extrémité d'un anneau (18) d'étanchéité qui interagit de manière étanche avec un élément (15, 16) de soutien correspondant.

10. Dispositif selon l'une des revendications précédentes, plusieurs supports (3) étant installés côte à côte.

11. Support (3) pour un dispositif selon l'une des revendications précédentes, **caractérisé par** des conduits (9) dotés de moyens (18) de raccordement à une extrémité en vue d'amener un liquide, ainsi que d'ouvertures (13, 14) orientées transversalement par rapport aux conduits (9) et destinées à loger des aiguilles creuses (4), comportant un bloc ou une plaque d'épaisseur relativement importante, des paires d'ouvertures (13, 14) débouchant dans les conduits (9), lesdites ouvertures (13, 14) de chaque paire étant alignées l'une par rapport à l'autre et définissant un passage pour une aiguille (4), dans chaque cas orientée transversalement par rapport au conduit (9).

12. Support (3) selon la revendication 11, les conduits (9) étant dotés de moyens de connexion à deux extrémités opposées afin d'amener un liquide.

13. Support (3) selon la revendication 11 ou 12, plusieurs conduits (9) parallèles étant aménagés.

14. Support (3) selon la revendication 11, 12 ou 13, comportant dans chaque ouverture (13, 14) un anneau (7, 8) d'étanchéité dans lequel l'aiguille (4) peut être logée.
